Europäisches Patentamt

European Patent Office

Office européen des brevets

(19)

(11) Veröffentlichungsnummer : **0 051 150**
**B1**

(12)                    EUROPÄISCHE PATENTSCHRIFT

(45) Veröffentlichungstag der Patentschrift :
23.05.84

(21) Anmeldenummer : 81107806.2

(22) Anmeldetag : 01.10.81

(51) Int. Cl.³ : **C 04 B 13/14**, C 04 B 41/28,
**C 04 B 11/09**

(54) Verfahren zum Hydrophobieren von Formkörpern aus Gips.

(30) Priorität : 03.11.80 DE 3041294

(43) Veröffentlichungstag der Anmeldung :
12.05.82 Patentblatt 82/19

(45) Bekanntmachung des Hinweises auf die Patenterteilung : 23.05.84 Patentblatt 84/21

(84) Benannte Vertragsstaaten :
AT BE CH DE FR GB IT LI LU NL SE

(56) Entgegenhaltungen :
AT-B-    192 838
CH-A-    612 167
FR-A- 1 157 365
US-A- 2 803 561

(73) Patentinhaber : DYNAMIT NOBEL AKTIENGESELL-
SCHAFT
Postfach 1209
D-5210 Troisdorf, Bez. Köln (DE)

(72) Erfinder : Schmidt, Werner, Dr.
Drachenfelsstrasse 49
D-5205 St. Augustin (DE)

**Beschreibung**

Gegenstand der vorliegenden Erfindung ist ein Verfahren, Formkörpernaus Gips eine erhöhte Resistenz gegenüber dem Eindringen von Wasser zu verleihen. Weiterer Gegenstand der vorliegenden Erfindung sind die nach dem vorliegenden Verfahren erhaltenen Formkörper.

Es ist bekannt, das Hemihydrat des Calciumsulfats — $CaSO_4 \cdot 1/2\ H_2O$ — durch Zusatz von Wasser abbinden zu lassen, wobei eine feste Masse entsteht. Das Abbinden kann auch unter Formgebung stattfinden, so daß auf diese Weise feste, ausgehärtete Formkörper aus Gips entstehen, wie z. B. Rohre, Platten oder Stäbe, die in der Bauindustrie eingesetzt werden. Eine gleiche Formgebung läßt sich auch mit Produkten durchführen, die nur überwiegend das Hemihydrat des Calciumsulfats enthalten und durch Erhitzen des Dihydrats des Calciumsulfats — $CaSO_4 \cdot 2\ H_2O$ — erhalten werden. Diese Produkte sind z. B. unter den Bezeichnungen Stuckgips, Baugips und Estrichgips bekannt. Auch der Alabastergips eignet sich zur Herstellung von Formkörpern.

Die auf die genannte Weise hergestellten Formkörper haben den Nachteil, daß sie sehr saugfähig sind und Wasser in erheblichen Mengen aufnehmen können, die bis zu 30 % ihres Eigengewichtes betragen können. Es bestand deshalb die Aufgabe, diese Wasseraufnahmefähigkeit zu mindern, ohne daß die Verarbeitbarkeit des noch nicht erhärteten Gipses erschwert wird.

Es ist bereits vorgeschlagen worden, Gips dadurch zu hydrophobieren, daß man das auszuhärtende Gipspulver mit hydrophobiertem silikatischem Pulver verschneidet. Auch der Zusatz von Harzbindemitteln, wie z. B. von Phenol-Furan-Harzen in Gegenwart aromatischer Sulfosäuren ist bereits vorgeschlagen worden, ohne daß damit eine befriedigende Lösung der genannten Aufgabe erreicht wurde.

In Erfüllung der genannten Aufgabe wurde nun gefunden, daß Formkörper aus Gips dann eine ausreichende Hydrophobierung besitzen, wenn ihre Hydrophobierung mit Hilfe eines Gemisches aus Alkalialuminat und Äthyl-, Propyl- oder n-Butylsilanolen in wässriger oder wässrig-alkoholischer Lösung erfolgt ist.

Es wurde weiterhin gefunden, daß man diese hydrophobierten Gips-Formkörper herstellen kann, indem man entweder nach ihrer Formgebung die vorgefertigten Körper mit der genannten Lösung behandelt oder eine solche Lösung bei der Herstellung der Formkörper einsetzt.

Es ist zwar schon bekannt, daß Alkyltrialkoxisilane Baustoffe hydrophobieren, wenn man sie auf die Oberfläche der Baustoffe aufbringt. Diese Produkte zeigen jedoch bei Gips keine oder nur eine unbedeutende Wirkung.

Dies läßt sich dadurch erklären, daß Gips kein silikatisches Material ist, während die durch Alkyltrialkoxisilane hydrophobierten Baustoffe alle silikatischer oder anorganisch-oxidischer Natur sind.

Überraschenderweise zeigt nur der Einsatz eines Gemisches aus dem beanspruchten Alkylsilanol und Alkalialuminat die gute hydrophobierende Wirkung. Beide Einzelsubstanzen des Gemisches, in wässriger oder wässrig-alkoholischer Lösung alleine eingesetzt, zeigen praktisch keine hydrophobierende Wirkung, selbst wenn sie in größeren Mengen angewendet werden. Das beanspruchte Gemisch bewirkt offenbar einen unerwarteten synergistischen Effekt.

Die in der erfindungsgemäß eingesetzten Lösung enthaltenen Alkylsilanole haben als Alkylgruppen entweder die Äthyl-, Propyl- oder n-Butylgruppe. Mit anderen Alkylgruppen erhält man keine stabilen wässrigen oder wässrig-alkoholischen Lösungen. Die Herstellung solcher Lösungen erfolgt durch Lösen von den entsprechenden Alkyltrialkoxisilanen in leicht angesäuertem Wasser und gegebenenfalls anschließendem Abdestillieren des bei der Hydrolyse entstehenden Alkohols. Die bei der Hydrolyse erhaltenen wässrigen oder wässrig-alkoholischen Lösungen enthalten das Alkylsilan überwiegend als Alkyltrihydroxisilan.

Ein Teil der Silanolgruppen kann auch in teilkondensierter Form über Si-O-Si-Gruppen vorliegen, wobei jedoch nicht mehr als 10 Si-O-Si-Einheiten pro Molekül vorhanden sind. Diese Teilkondensation tritt besonders dann ein, wenn konzentriertere Lösungen als die bevorzugt zu verwendenden Lösungen eingesetzt werden. Im allgemeinen sollen die einzusetzenden Lösungen bis zu 5 Gew.-% an Alkylsilanolen enthalten.

Die einzusetzenden Lösungen enthalten vorzugsweise zwischen 0,2 und 2,0 Gew.-% Alkylsilanol, bezogen auf das Gewicht des Gipspulvers. Prinzipiell ist es auch möglich, größere Mengen an Alkylsilanolen einzusetzen, jedoch ergeben sie keine bessere hydrophobierende Wirkung. Die besonders bevorzugten Mengen des Alkylsilanols in der Lösung liegen zwischen 0,3 und 1,0 Gew.-%, bezogen auf das Gipspulver.

Das Alkalialuminat wird im allgemeinen in Mengen zwischen 0,15 und 1,0 Gew.-%, vorzugsweise zwischen 0,2 und 0,4 Gew.-%, bezogen auf die Menge des Gipspulvers, eingesetzt. Auch ist der Einsatz größerer Mengen möglich ; er ergibt jedoch keine nennswerte Verbesserung der Hydrophobie.

Das Gewichtsverhältnis von Alkylsilanol : Alkalialuminat kann in weiten Grenzen zwischen 1 : 10 und 10 : 1 schwanken. Bevorzugt werden auf 10 Teile Alkylsilanol zwischen 3, 5 und 6 Teile Alkalialuminat eingesetzt.

Als Alkalialuminate eignen sich vor allem Natrium- und Kaliumaluminat ; bevorzugt wird Natriumaluminat eingesetzt.

Erfindungsgemäß wird unter Gips ein Calciumsulfat verstanden, aus dem sich in bekannter Weise

2

durch Zusatz von Wasser feste Formkörper beliebiger Dimension herstellen lassen. Im allgemeinen wird dazu das oben genannte Hemihydrat eingesetzt. Erfindungsgemäß lassen sich jedoch auch alle bekannten Gipssorten, wie z. B. die oben erwähnten Stuck-, Estrich- und Baugipse oder der Alabastergips einsetzen. Sie lassen sich alle in an sich bekannter Weise mit Wasser zu Formkörpern verarbeiten. Solche Formkörper, die auch in der Bauindustrie eingesetzt werden, können ggf. mit anderen Baumaterialien, wie z. B. Pappe, Glaswolle oder Asbest als Verbundkörper hergestellt sein. Auch diese Körper lassen sich erfindungsgemäß hydrophobieren. Die erfindungsgemäße Hydrophobierung der Formkörper aus Gips läßt sich auf zweierlei Weise durchführen : Entweder behandelt man den fertigen Formkörper mit einer wässrigen oder wässrig-alkoholischen Lösung des erfindungsgemäßen Gemisches oder man verwendet diese Lösung zur Herstellung der Formkörper.

Wenn man die Formkörper unter Verwendung der Lösung des Alkylsilanols und des Alkalialuminats herstellt, dann wird praktischerweise von vorgefertigten konzentrierteren Lösungen von Alkalialuminat und Alkylsilanol ausgegangen, die dann mit der für die Herstellung der Formkörper notwendigen Menge Wasser verdünnt werden ; diese Menge ist dem Fachmann bekannt. Sie richtet sich unter anderem nach der Art des Gipses, der Aushärtetemperatur und der gewünschten Dauer der Verarbeitbarkeit des dabei zwischenzeitlich erhaltenen Gipsbreis. Diese Menge kann ggf. in Vorversuchen ermittelt werden.

Die wässrige Lösung des Alkylsilanols kann ggf. noch Alkohol enthalten, der aus der Hydrolyse des korrespondierenden Alkyltrialkoxisilans herrührt. In vielen Fällen braucht dieser freigesetzte Alkohol aus der durch die Hydrolyse erhaltenen wässrigen Lösung des Alkylsilanols nicht abdestilliert zu werden.

Nach dem Untermischen der Silanol- und Alkalialuminatlösung unter das Gipspulver wird der dabei erhaltene Brei auf an sich bekannte Weise zu Formkörpern weiterverarbeitet. Dem Gipspulver können dabei auch an sich bekannte Zuschlagmittel, die z. B. die Oberflächenbeschaffenheit des Gipses verbessern, wie z. B. Aluminiumoxihydrat, hinzugegeben werden, ohne daß der hydrophobierende Effekt der erfindungsgemäßen Lösung beeinträchtigt wird.

Die Behandlung der fertigen Gips-Formkörper erfolgt mit einer wässrigen oder wässrig-alkoholischen Lösung von Alkylsilanol und Alkalialuminat auf an sich bekannte Weise durch Pinseln, Streichen, Sprühen oder Tauchen. Dabei ist es auch möglich, konzentriertere Lösungen des erfindungsgemäßen Gemisches einzusetzen, damit bereits in einem einmaligen Behandlungsprozeß die für die Hydrophobierung der Oberfläche notwendige Menge von dem Formkörper aufgenommen wird. Wenn verdünnte Lösungen eingesetzt werden, ist gegebenenfalls eine zweite oder eine noch weitere Behandlung mit der Lösung notwendig.

## Beispiel 1

Herstellen einer Silanollösung :

50 g Propyl-trimethoxisilan wurden mit 50 g Wasser, dem 2 Tropfen 1 %ige HCl zugesetzt sind, bei Zimmertemperatur gerührt, bis nach wenigen Minuten eine klare Lösung entstanden war. Die fertige Lösung enthielt neben dem durch Hydrolyse abgespaltenen Alkohol theoretisch 37 g Propylsilantriol.

Herstellung von Gipsstäben :

Es wurden 48 g Wasser mit 1,4 g der oben genannten Propylsilantriollösung (= 0,5 g Propylsilantriol) und mit 0,5 g einer 50 %igen Natriumaluminatlösung (= 0,25 g Natriumaluminat) in Wasser vermischt und mit 100 g handelsüblichem Gips verrührt. Der homogene Brei wurde in eine Stahlform gefüllt, die Stäbe der Abmessungen 21 × 22 × 163 mm ergibt. In dieser Form ließ man den Gips abbinden und aushärten. Nach Ablauf von 24 Stunden wurden die fertigen Stäbe der Form entnommen und 7 Tage lang bei Zimmertemperatur trocken gelagert. Das Gewicht eines Stabes betrug z. B. 99,67 g.

Zur Bestimmung der Hydrophobie wurde ein Stab unter Wasser gelegt und nach bestimmten Zeiten ausgewogen. In der Tabelle 1 sind die erhaltenen Werte aufgeführt ; die Wasseraufnahme ist in Gew.-%, bezogen auf das Gewicht des trockenen Gipsstabes angegeben. Zum Vergleich sind die Versuchsergebnisse aufgeführt, wie sie ein entsprechender Gipsstab ohne die erfindungsgemäßen Zusätze zeigt.

Tabelle 1

|  | Hydrophober Gipsstab | | Normaler Gipsstab | |
|---|---|---|---|---|
|  | Gewicht | Gewichts-zunahme | Gewicht | Gewicht-zunahme |
| Vor Wasserlagerung | 99,67 g | — | 102,98 g | — |
| Wasserlagerung |  |  |  |  |
| nach 1 Stunde | 100,18 g | 0,5 % | 125,19 g | 21,6 % |
| nach 7 stunden | 100,66 g | 1,0 % | 125,46 g | 21,8 % |
| nach 24 Stunden | 101,48 g | 1,8 % | 126,40 g | 22,8 % |

**0 051 150**

Beispiel 2

Die Herstellung der Silanollösung erfolgte wie bei Beispiel 1, jedoch wurde statt Propyltrimethoxisilan die gleiche Menge Propyltriäthoxisilan eingesetzt. Die fertige Lösung enthielt neben dem durch Hydrolyse abgespaltenen Alkohol theoretisch 29 g Propyltrihydroxisilan.

46 g Wasser wurden mit 3,5 g dieser Lösung (= 1,0 g Propylsilantriol) und mit 0,8 g einer 50 %igen Natriumaluminatlösung (= 0,4 g Natriumaluminat) in Wasser vermischt und mit 100 g handelsüblichem Gips verrührt. Der homogene Brei wurde zur Herstellung eines Stabes bekannter Abmessungen verwendet und dieser nach dem Abbinden durch Unterwasserlagerung ausgeprüft. Die Ergebnisse gehen aus der folgenden Tabelle 2 hervor :

Tabelle 2

| | Hydrophober Gipsstab | |
|---|---|---|
| | Gewicht | Gewichtzunahme |
| Vor Wasserlagerung | 99,18 g | — |
| Wasserlagerung | | |
| nach 1 Stunde | 99,75 g | 0,6 % |
| nach 7 Stunden | 100,82 g | 1,7 % |
| nach 24 Stunden | 101,83 g | 2,7 % |

Beispiel 3 (Vergleichsversuch 1)

48 g Wasser wurden mit 3 g 50 %iger wässriger Natriumaluminatlösung vermischt und mit 100 g Gips zu einem Brei angerührt. Der daraus entsprechend Beispiel 1 hergestellte Stab zeigte nach 7 tägiger Trockenlagerung folgende Wasseraufnahme :

| | Gewicht | Gewichtzunahme |
|---|---|---|
| Vor Wasserlagerung | 96,08 g | — |
| Wasserlagerung | | |
| nach 1 Stunde | 119,22 g | 24,1 % |
| nach 7 Stunden | 119,48 g | 24,4 % |
| nach 24 Stunden | 120,57 g | 25,5 % |

Beispiel 4 (Vergleichsversuch 2)

48 g Wasser wurden mit 3 g einer 37 %igen Propylsilantriollösung vermischt (1,1 %) ; daraus wurde mit 100 g Gips analog Beispiel 1 ein Stab hergestellt. Die Wasseraufnahme des Stabes bei Lagerung unter Wasser nahm folgenden Verlauf :

| | Gewicht | Gewichtzunahme |
|---|---|---|
| Vor Wasserlagerung | 110,10 g | — |
| Wasserlagerung | | |
| nach 1 stunde | 125,79 g | 25,7 % |
| nach 5 Stunden | 126,00 g | 25,9 % |
| nach 24 Stunden | 126,50 g | 26,4 % |

Beispiel 5

Hydrophobieren eines fertigen Gipsstabes

Ein nach Beispiel 1 hergestellter Gipsstab, der keinerlei Zusätze enthält, wurde nach 7 tägiger Lagerung bei Zimmertemperatur eine Minute lang in eine wässrig-alkoholische Lösung getaucht, die 1 Gew.-% Propylsilantriol und 0,5 Gew.-% Natriumaluminat enthielt und anschließend getrocknet.

Zur Ausprüfung wurde der so behandelte Gipsstab unter Wasser gelagert und nach bestimmten Zeiten ausgewogen. Die Tabelle 3 gibt die Wasseraufnahme in Gewichtsprozent an, bezogen auf das Gewicht des trockenen Gipsstabes.

4

# 0 051 150

Tabelle 3

|  | Gewicht | Gewichtzunahme |
|---|---|---|
| Vor Wasserlagerung | 92,23 g | — |
| Wasserlagerung |  |  |
| nach 1 stunde | 92,66 g | 0,5 % |
| nach 3 Stunden | 93,04 g | 0,9 % |
| nach 8 Stunden | 96,76 g | 4,7 % |

Ähnliche Ergebnisse werden erhalten, wenn die Konzentration der wässrig-alkoholischen Lösung an dem Gemisch Propylsilantriol/Natriumaluminat (Gew.-Verhältnis 1 : 0,5) doppelt oder halb so groß ist.

## Ansprüche

1. Unter Verwendung von Alkylsilanen hydrophobierte Formkörper aus Gips oder Gips als überwiegenden Bestandteil enthaltenden Materialien, dadurch gekennzeichnet, daß ihre Hydrophobierung mit Hilfe eines Gemisches aus Alkalialuminat und Äthyl-, Propyl- oder n-Butylsilanolen in wässriger oder wässrig-alkoholischer Lösung erfolgt ist.

2. Verfahren zur Herstellung von Formkörpern gemäß Anspruch 1 durch Abbinden von Gips mit Wasser unter Formgebung, dadurch gekennzeichnet, daß man das Abbinden mit einer wässrigen oder wässrig-alkoholischen Lösung von Äthyl-, Propyl- oder n-Butylsilanolen und Alkalialuminaten durchführt.

3. Verfahren zur Herstellung von Formkörpern gemäß Anspruch 1, dadurch gekennzeichnet, daß man einen vorgefertigten Formkörper aus Gips mit einer wässrigen oder wässrig-alkoholischen Lösung von Äthyl-, Propyl- oder n-Butylsilanolen und Alkalialuminaten behandelt.

4. Verfahren gemäß Ansprüchen 2 oder 3, dadurch gekennzeichnet, daß die Lösung die Alkylsilanole in Mengen zwischen 0,2 und 2,0 Gew.-%, und das Alkalialuminat in Mengen zwischen 0,15 und 1,0 Gew.-%, jeweils bezogen auf den Gips, enthält.

## Claims

1. Shaped bodies formed of materials containing gypsum or gypsum as predominating component, which have been made hydrophobic by treatment with alkylsilanes, characterised in that their rendering hydrophobic is carried out with the aid of a mixture of alkalialuminate and silanols (ethyl, propyl or n-butyl) in aqueous or aqueous-alcoholic solution.

2. Process for the production of shaped bodies according to claim 1 by binding of gypsum with water while undergoing shaping, characterised in that the binding is carried out with an aqueous or aqueous-alcoholic solution of silanols (ethyl, propyl or n-butyl) and alkalialuminates.

3. Process for the production of shaped bodies according to claim 1, characterised in that a prefabricated shaped body formed of gypsum is treated with an aqueous or aqueous-alcoholic solution of silanols (ethyl, propyl or n-butyl) and alkalialuminates.

4. Process according to claim 2 or 3, characterised in that the solution contains the alkylsilanols in amounts between 0.2 and 2.0 % by weight and the alkalialuminate in amounts between 0.15 and 1.0 % by weight both related to the gypsum.

## Revendications

1. Corps moulés en plâtre, ou en matériaux contenant du plâtre comme constituant prépondérant, hydrofugés par l'emploi d'alcoylsilanes, caractérisés en ce que leur hydrofugation est réalisée à l'aide d'un mélange d'aluminate alcalin et d'éthyl-, propyl- ou n-butylsilanols en solution aqueuse ou aquo-alcoolique.

2. Procédé de fabrication de corps moulés selon la revendication 1 par prise du plâtre avec de l'eau tout en donnant la forme, caractérisé en ce qu'on exécute la prise avec une solution aqueuse ou aquo-alcoolique d'éthyl-, propyl- ou n-butylsilanols et d'aluminates alcalins.

3. Procédé de fabrication de corps moulés selon la revendication 1, caractérisé en ce qu'on traite un corps moulé, préalablement confectionné en plâtre, avec une solution aqueuse ou aquo-alcoolique d'éthyl-, propyl- ou n-butyl-silanols et d'aluminates alcalins.

4. Procédé selon la revendication 2 ou 3, caractérisé en ce que la solution contient les alcoylsilanols en des quantités entre 0,2 et 2,0 % en poids et l'aluminate alcalin en des quantités entre 0,15 et 1,0 % en poids, chaque fois par rapport au plâtre.

5